**Europäisches Patentamt**

(19) **European Patent Office**

**Office européen des brevets**

(11) Veröffentlichungsnummer: **0 253 263**
**B1**

(12) ## EUROPÄISCHE PATENTSCHRIFT

(45) Veröffentlichungstag der Patentschrift:
26.09.90

(51) Int. Cl.⁵: **B60P 1/02**

(21) Anmeldenummer: **87109707.7**

(22) Anmeldetag: **06.07.87**

(54) **Fahrzeug mit einem kastenförmigen Aufbau und einer Hubmechanik.**

(30) Priorität: **16.07.86 DE 8619081 U**

(43) Veröffentlichungstag der Anmeldung:
**20.01.88 Patentblatt 88/3**

(45) Bekanntmachung des Hinweises auf die Patenterteilung:
**26.09.90 Patentblatt 90/39**

(84) Benannte Vertragsstaaten:
**AT CH DE FR GB IT LI NL**

(56) Entgegenhaltungen:
**EP-A- 0 136 970**
**DE-A- 2 335 678**
**DE-U- 7 821 518**
**US-A- 3 687 321**

(73) Patentinhaber: **FFG FAHRZEUGWERKSTÄTTEN FALKENRIED GMBH, Falkenried 7-19, D-2000 Hamburg 20(DE)**

(72) Erfinder: **Schrödter, Uwe, Dipl.-Ing., Dahlenhöhe 5, D-2100 Hamburg 90(DE)**
Erfinder: **Materne, Wolfgang, Dipl.-Ing., Volksdorfer Weg 25, D-2071 Ammersbek 1(DE)**

(74) Vertreter: **Glawe, Delfs, Moll & Partner Patentanwälte, Postfach 26 01 62 Liebherrstrasse 20, D-8000 München 26(DE)**

ACTORUM AG

## Beschreibung

Die Erfindung betrifft ein Fahrzeug mit einem kastenförmigen Aufbau, der über eine Hubmechanik mit dem Fahrgestell verbunden ist und eine Ladeöffnung und eine vor der Ladeöffnung in vertikaler Richtung verschiebbar gelagerte Plattform mit Seitenwänden aufweist, die in vertikalen Schienen gelagert ist, die am Rand der Ladeöffnung angeordnet sind.

Fahrzeuge dieser Art werden zum Beispiel als Beschickungsfahrzeug für Flugzeuge verwendet, um das Flugzeug zu beladen, insbesondere, um es mit Speisen und Getränken zu versorgen. Bei solchen Fahrzeugen, wie sie zu diesem Zweck von Catering-Unternehmen verwendet werden, tritt häufig das Problem auf, daß die Ladeluken sehr schwer zugänglich sind und auch klein sind. In diesem Falle ist es dann schwierig, den kastenförmigen Aufbau des Fahrzeuges richtig mit seiner Ladeöffnung an die entsprechende Ladetür oder Ladeluke des Flugzeuges heranzubringen, damit die Behälter mit den vorbereiteten Speisen usw. ohne Schwierigkeiten in das Flugzeug gebracht, insbesondere gefahren werden können.

Bei einem Fahrzeug der eingangs genannten Art (DE-U 7 821 518) kann nicht nur eine Höhenregulierung der Plattform erfolgen, wenn der kastenförmige Aufbau mit der Hubmechanik nicht genau in die richtige Höhe gebracht worden ist. Vielmehr kann auf diese Weise die Plattform sogar auf die Höhe der Unterkante der Ladeluke des Flugzeuges gefahren werden, wenn der gesamte Aufbau nicht entsprechend in der Höhe eingestellt werden kann, weil zum Beispiel Tragflächen, Leitwerke oder Motoren im Wege sind. Es bleibt aber das Problem, daß zum Beispiel bei neben einer Tragfläche angeordneten Ladeöffnungen die Plattform nicht genau an diese herangefahren werden kann.

Die Erfindung hat es sich zur Aufgabe gesetzt, ein Fahrzeug der eingangs genannten Art so zu verbessern, daß auch schwer zugängliche und ungünstig gelegene Ladetüren oder Ladeluken von Flugzeugen gut erreicht werden können.

Die erfindungsgemäße Lösung besteht darin, daß die vertikalen Schienen Teil eines rechteckigen Rahmens sind, der an einer Stirnwand des Aufbaus seitlich verschiebbar gelagert ist.

Durch den rechteckigen Rahmen erhält man ein in sich stabiles, seitlich verschiebbares Gebilde, an dem dann die Plattform in vertikaler Richtung verschoben werden kann. Da der rechteckige Rahmen aber an der Stirnwand des Aufbaus seitlich verschiebbar angeordnet ist, kann damit die Plattform, die als Ladebrücke wirkt, sowohl in vertikaler als auch in horizontaler Richtung verschoben werden. Es leuchtet ein, daß damit auch schwer zugängliche Ladeluken wesentlich leichter zu erreichen sind.

Wenn die Plattform an der Stirnwand seitlich verschoben wird, muß selbstverständlich auch die Ladeöffnung an der Stirnwand genügend groß sein. Bei einer besonders zweckmäßigen Ausführungsform wird vorgesehen, daß die Stirnwand des Aufbaus auf jeder Seite der Ladeöffnung einen Wandteil aufweist, der als Faltenbalg ausgebildet ist. Auf diese Weise ist bei jeder Stellung immer nur eine Ladeöffnung normaler Größe offen, die dazu noch durch eine Tür oder ein Rolltor verschlossen werden kann. Man erhält also einen geschlossenen Aufbau, bei dem aber trotzdem die Ladeöffnung über fast die ganze Stirnwand des Aufbaus verschoben werden kann.

Wenn die Plattform zweiteilig ausgebildet ist, wobei der vordere Teil teleskopförmig im hinteren Teil gelagert ist, können Abstände zwischen Aufbau und Ladeluke des Flugzeuges ausgeglichen werden. Es ist in diesem Falle nicht erforderlich, mit dem gesamten Fahrzeug bis auf wenige Zentimeter genau an das Flugzeug heranzufahren. Selbstverständlich wird hierdurch der Belade- und Entladevorgang wesentlich vereinfacht und beschleunigt.

Insbesondere dann, wenn die Plattform nicht in Horizontalrichtung verschiebbar ist, ist es zweckmäßig, wenn die Grundfläche der Plattform ein schwenkbares Parallelogrammgestänge und ihr Boden zwei Halbkreisplatten und zwei Platten aufweist, die an ihrer Außenseite eine zur Halbkreisfläche komplementäre Form haben. In diesem Fall kann nämlich die Vorderkante der Plattform verschwenkt werden, um auf diese Weise den Zugang auch dann zur Ladeluke zu ermöglichen, wenn die Ladeluke seitlich versetzt vor der Ladeöffnung des Aufbaus angeordnet ist.

Sieht man bei der bereits erwähnten teleskopartigen Konstruktion der Plattform vor, daß das teleskopartige Herausfahren des vorderen Plattformteiles nicht auf beiden Seiten gleichmäßig erfolgen muß, sondern auch an einer Seite stärker erfolgen kann als an der anderen, so kann in diesem Falle die Vorderkante der Plattform zusätzlich zu der parallelogrammartigen Verschwenkung der Plattform noch verschwenkt werden, um so eine Anpassung an eine in Bezug auf die Stirnfläche schrägstehende Ladeluke zu schaffen.

Dadurch, daß erfindungsgemäß die Plattform in Vertikalrichtung verschoben werden kann, kann nicht nur eine Anpassung an die Höhe der Ladeluke erfolgen. Man kann vielmehr, wenn der Aufbau nach dem Beladen auf das Fahrzeug abgesenkt wird, vorher die Plattform anheben, so daß sie sich bei abgesenktem Aufbau oberhalb der Fahrerkabine befindet, so daß sie keinen zusätzlichen Raum einnimmt.

Man kann aber auch vorsehen, daß die Plattform an ein Hochklappen derselben ermöglichenden Schwenkgelenken befestigt ist und die Seitenwände als Parallelogrammgestänge ausgebildet sind. Auf diese Weise kann die Plattform, wenn sie nicht benötigt wird, zum Beispiel wenn der Aufbau abgesenkt wird, in sehr raumsparender Weise zusammengefaltet werden, so daß sie keinen zusätzlichen Raum benötigt.

Bei einer vorteilhaften Ausführungsform ist die Plattform in ihrer Ebene verschiebbar und kann in eine entsprechende Ausnehmung im Aufbau versenkt werden. Zu diesem Zweck ist die Plattform von einer Scherenmechanik beidseitig gehalten. Wird die Scherenmechanik auf der einen Seite stärker oder weniger stark ausgefahren als auf der anderen Seite oder überhaupt nur auf einer Seite ausgefahren, so kann die Plattform auch geschwenkt werden.

Die Erfindung wird im folgenden anhand von vorteilhaften Ausführungsformen unter Bezugnahme auf die beigefügten Zeichnungen beschrieben. Es zeigen:

Figur 1 ein Fahrzeug mit einem kastenförmigen Aufbau in dessen abgesenkter Stellung;

Figur 2 das Fahrzeug der Figur 1 mit angehobenen Aufbau;

Figur 3 Einzelheiten der Befestigung der Plattform am kastenförmigen Aufbau;

Figur 4 eine andere Art der Befestigung der Plattform am kastenförmigen Aufbau,

Figur 5 bis 7 verschiedene Stellungen der Plattform der Figur 4;

Figur 8 eine andere Ausführungsform der erfindungsgemäßen Plattform bei angehobenen Aufbau;

Figur 9 die Anordnung der Figur 8 bei abgesenktem Aufbau;

Figur 10 eine noch andere Ausführungsform der erfindungsgemäßen Plattform in Seitenansicht; und

Figur 11 die Plattform der Figur 10 in Draufsicht.

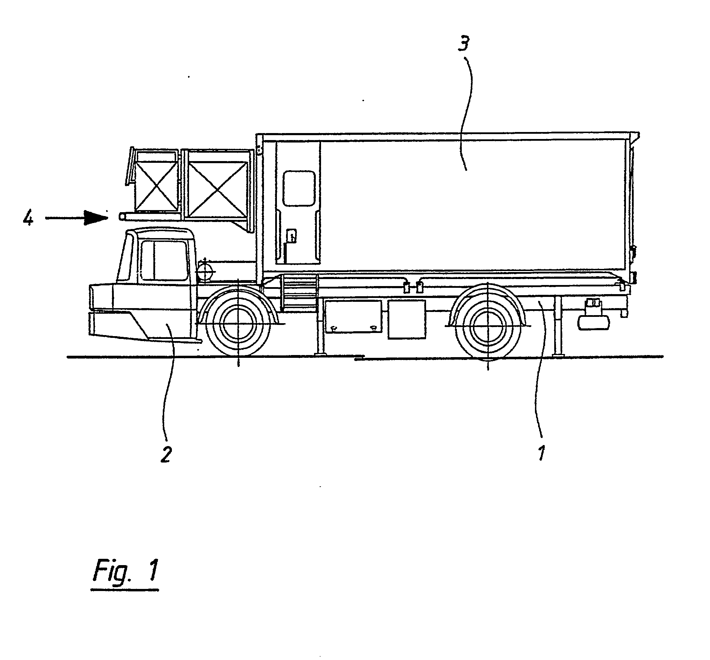

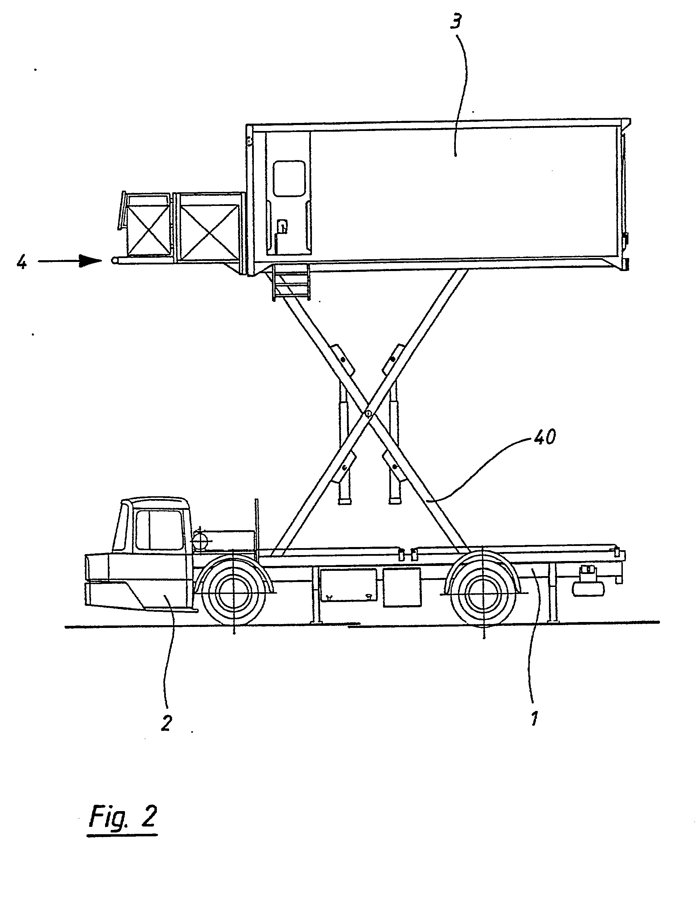

In Figur 1 ist ein Fahrzeug mit einem Fahrgestell (1) und einer Fahrerkabine (2) gezeigt, das einen kastenförmigen Aufbau (3) aufweist. In Figur 2 ist dasselbe Fahrzeug gezeigt, bei dem aber der kastenförmige Aufbau (3) mit Hilfe einer bekannten Hubschere (40) angehoben ist.

An der Vorderseite des kastenförmigen Aufbaus (3) ist eine Plattform (4) angeordnet, die in der Höhe verstellbar ist, so daß sie zum Beispiel in der Stellung der Figur 1 nach oben gefahren werden kann und über der Fahrerkabine (2) angeordnet ist und dort keinen zusätzlichen Platz beansprucht, wenn der kastenförmige Aufbau (3) abgesenkt ist.

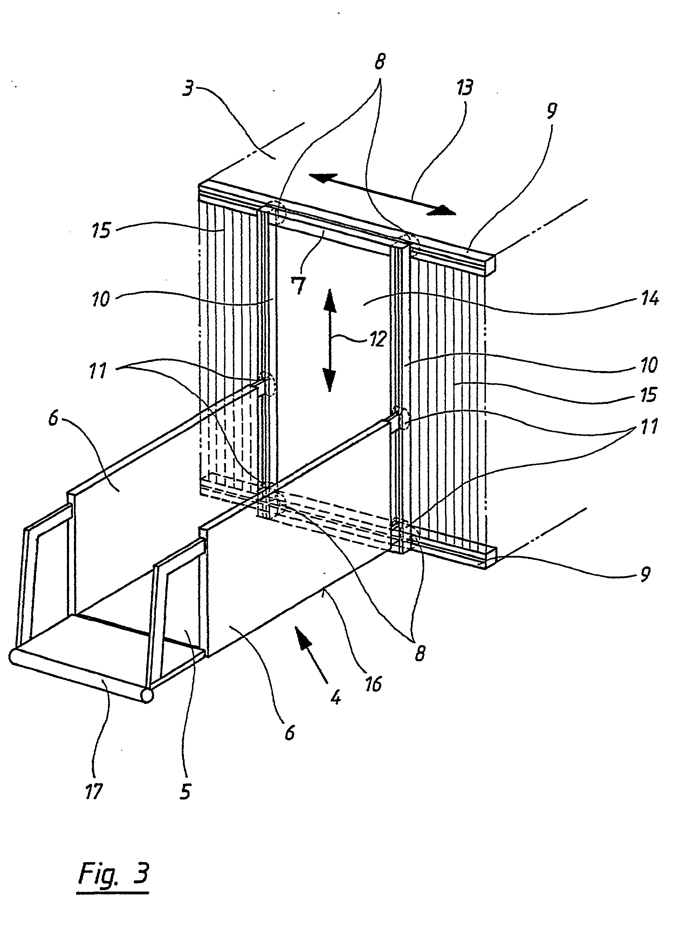

Wie dies in Figur 3 dargestellt ist, besteht die Plattform (4) aus einem Bodenteil (5) und Seitenwänden (6). Sie ist mit Hilfe eines rechteckigen Rahmens (7) am kastenförmigen Aufbau (3) befestigt. Der Rahmen (7) ist dabei mit vier Rollen (8) oder ähnlichen Lagern an zwei horizontalen Schienen (9) in Horizontalrichtung verschiebbar gelagert. Die beiden senkrechten Streben (10) des Rahmens (7) sind dabei als Schienen ausgebildet, in denen die Plattform (4) mit Hilfe von Rollen (11) vertikal verschiebbar angeordnet ist. Aufgrund dieser Anordnung kann die Plattform (4) wie dies durch die Pfeile (12 und 13) angedeutet ist, sowohl vertikal als auch horizontal verschoben werden. Damit dabei die Stirnfläche des kastenförmigen Aufbaus (3) bis auf die Ladeöffnung (14) verschlossen bleibt, sind die Wandbereiche der Stirnfläche des kastenförmigen Aufbaus (3), die sich seitlich an die Ladeöffnung anschließen, als Faltenbälge (15) ausgebildet.

Die Plattform (4) besteht aus zwei Teilen, nämlich einem hinteren, am Aufbau wie beschrieben befestigten Teil (16), und einem vorderen Teil (17), der teleskopartig im hinteren Teil (16) gelagert ist, so daß die Gesamtlänge der Plattform (4) eingestellt werden kann.

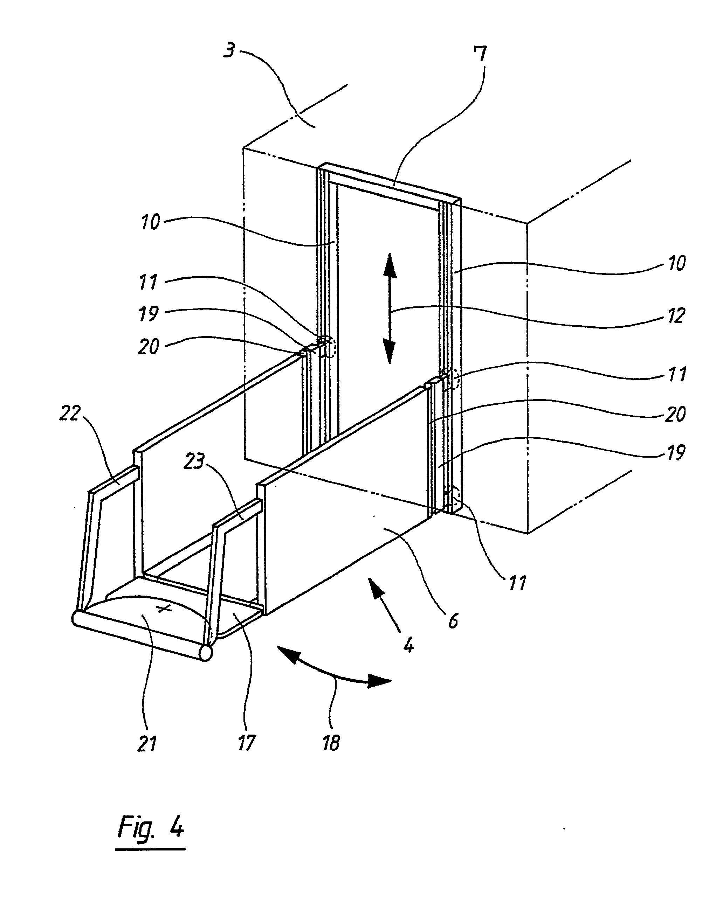

Bei der Ausführungsform der Figur 4 ist der rechteckige Rahmen (7) starr an der Stirnwand befestigt. In diesem Falle ist die Plattform (4) mit Hilfe der Rollen (11), die in der Schiene (10) gelagert sind, lediglich in Vertikalrichtung des Doppelpfeiles (12) verschiebbar. Zusätzlich ist aber die Plattform (6) in Richtung des Doppelpfeiles (18) um eine vertikale Achse schwenkbar. Zu diesem Zweck ist die Plattform (4) nicht direkt an den Rollen (11) befestigt, sondern schwenkbar an einem U-förmigen Rahmen (19) befestigt, der mit Hilfe der Rollen (11) in Vertikalrichtung verschiebbar in den Schienen (10) gelagert ist. Um die vertikalen Drehachsen (20) am Rahmen (19) kann dann die Plattform (4) verschwenkt werden, die zu diesem Zwecke als ein in Richtung des Doppelpfeiles (18) verschwenkbares Gestänge aufgebaut ist. Zu diesem Zwecke weist die Bodenfläche an ihren Enden je eine Halbkreisplatte auf, von denen in Figur 4 nur die vordere Halbkreisplatte (21) gezeigt ist. Mit Hilfe dieser Anordnung kann die Vorderkante der Plattform (4) im wesentlichen auf einen Kreisbogen an verschiedene Stellen gebracht werden. Soll dabei auch noch die Orientierung der Vorderkante in Bezug auf die Stirnkante des Aufbaus (3) winkelmäßig verstellt werden, so ist es lediglich erforderlich, die beiden Seitenteile (22 und 23) des Vorderteiles (17) der Plattform (4) unterschiedlich stark hereinzufahren.

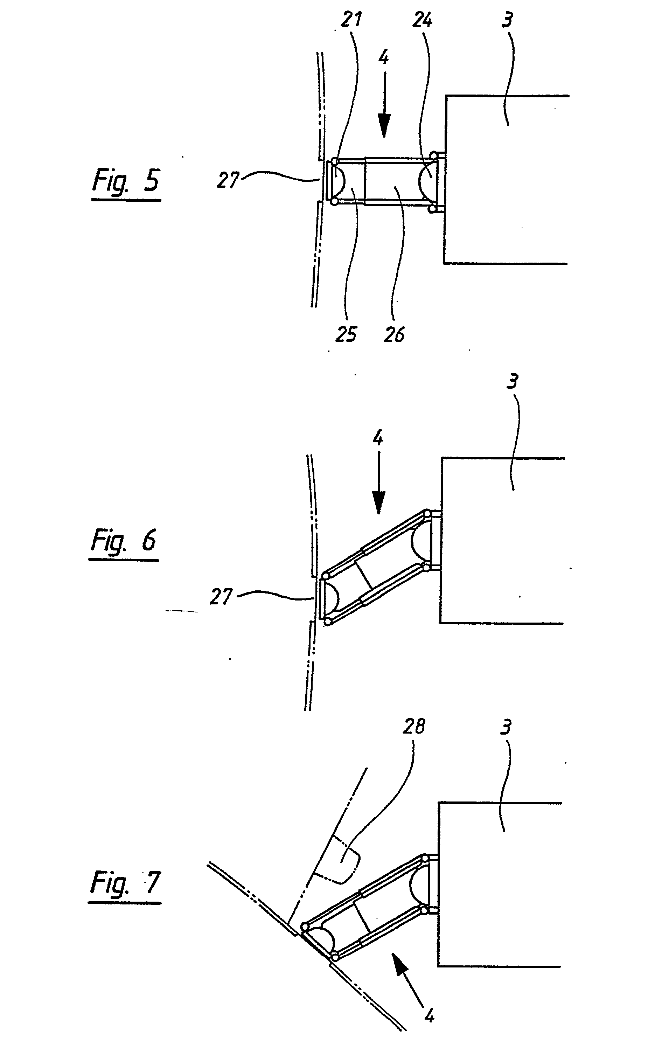

Die verschiedenen Einstellmöglichkeiten, die sich daraus ergeben, sind in den Figuren 5 bis 7 gezeigt. Dort ist auch außer der vorderen Halbkreisplatte noch eine entsprechende hintere Halbkreisplatte (24) gezeigt. Zwischen diesen beiden Halbkreisplatten befinden sich weitere, übereinander schiebbare Platten (25 und 26), die an ihren äußeren Enden eine den Halbkreisplatten (21 und 24) komplementäre Form haben.

In der Stellung der Figur 5 ist die Plattform (4) unverschwenkt an eine Ladeluke (27) herangefahren. Bei der Darstellung der Figur 6 ist die Ladeluke (27) seitlich versetzt, so daß die Plattform (4) mit Hilfe des Parallelogrammgestänges verschwenkt ist. Bei der Stellung der Figur 7 ist schließlich auch noch die Vorderkante in der Plattform (4) in bezug auf die Vorderkante der Stirnfläche des Aufbaus (3) verschwenkt, damit so die Vorderkante der Plattform (4) ganz an der Ladeluke anliegen kann, was sonst nicht möglich wird, da hier ein Hindernis im Weg steht, zum Beispiel ein bei (28) angedeuteter Flugzeugmotor.

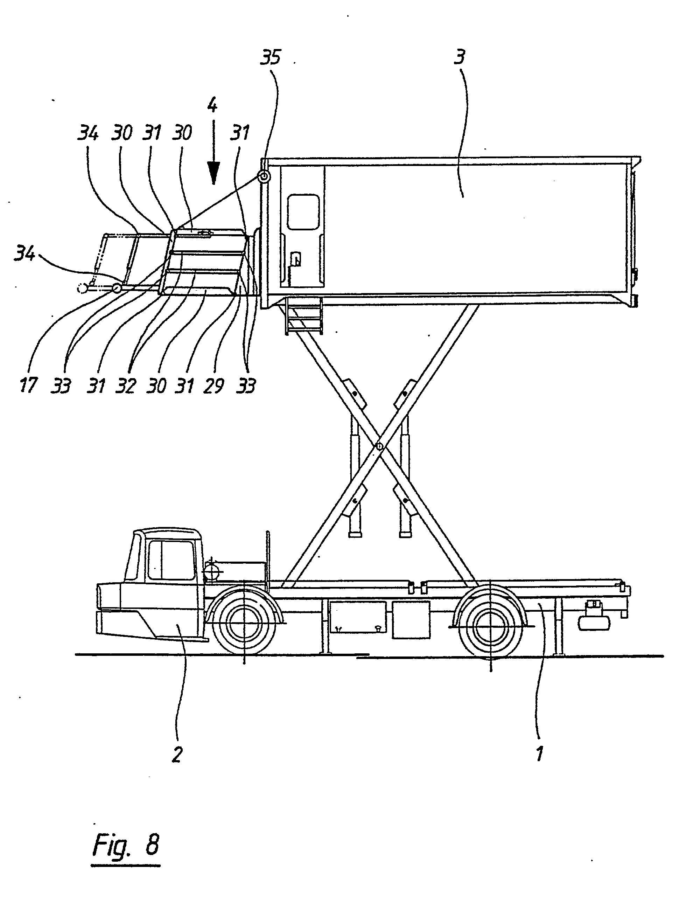

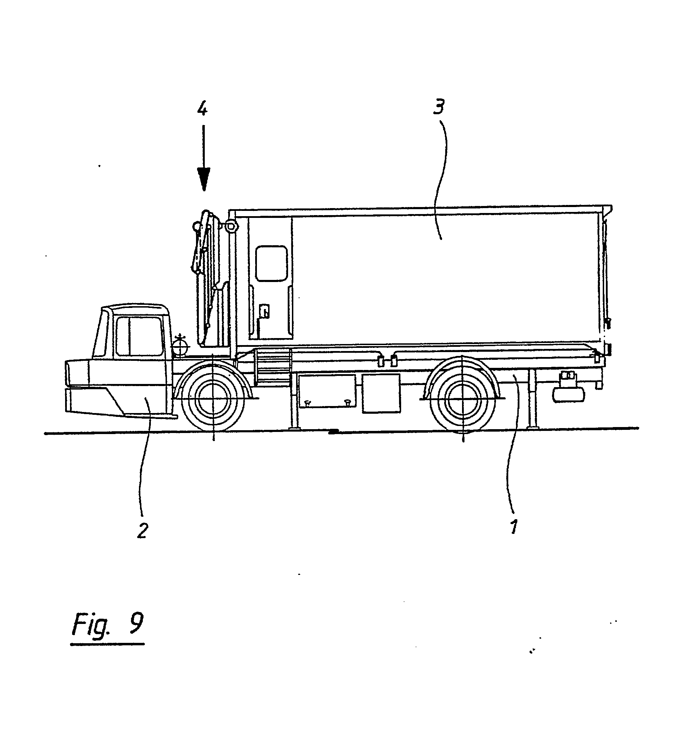

In den Figuren 8 und 9 ist eine andere Ausführungsform gezeigt, und zwar einmal bei angehobenen Aufbau (3) (Figur 8) und einmal bei abgesenktem Aufbau (Figur 9). Bei dieser Ausführungsform sind auch die Seitenwände der Plattform als Parallelogrammgestänge ausgebildet. Das Parallelogramm besteht dabei aus einem jedenfalls in Vertikalrichtung nicht verschwenkbaren Rahmenteil (29), der aber möglicherweise in Horizontalrichtung verschwenkbar ist (wie bei der Ausführungsform der Figuren 4 bis 7) und der auf jeden Fall in Vertikalrichtung verschiebbar ist. Das Parallelogramm wird durch drei Rahmenteile (30) vervollständigt, die an ihren Ecken über Schwenkpunkte (31) miteinander bzw. dem Rahmenelement (29) verbunden sind. Zusätzliche Gitterstreben (32) sind dabei über Schwenkpunkte (33) an den senkrechten Rahmenteilen (29 bzw. 30) befestigt. Auch der Vorderteil (17), der noch teleskopartig verschiebbar angeordnet ist, wie dies in der Figur gestrichtelt angedeutet ist, ist als Parallelogrammgestänge ausgebildet mit Schwenkpunkten (34) an den Ecken. Das ganze Gebilde kann über eine Seilwinde (35), die es in der in Figur 8 gezeigten Stellung hält, hochgeschwenkt werden, so daß es die platzsparende Stellung der Figur 9 einnimmt.

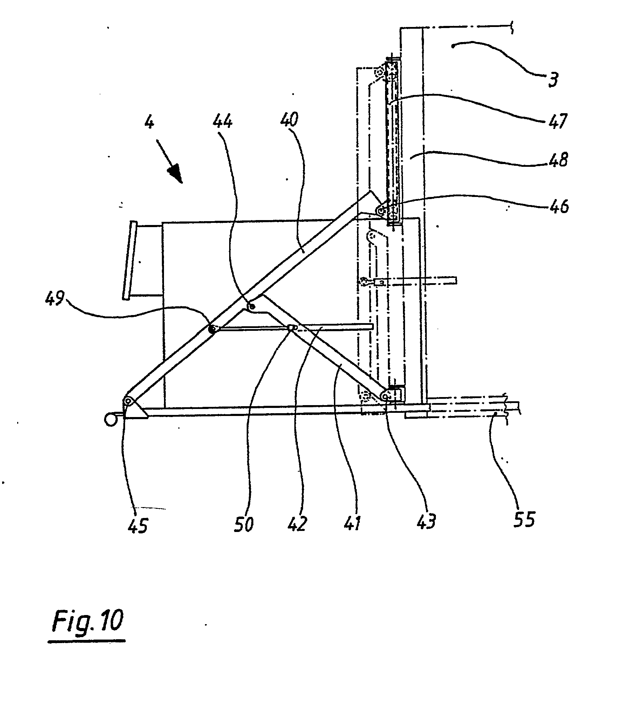

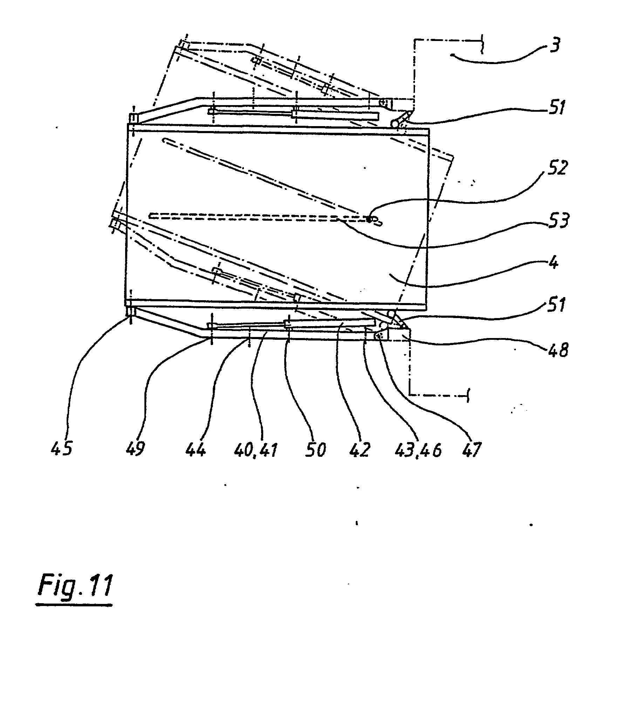

In den Figuren 10 und 11 ist eine weitere Ausführungsform gezeigt. In Figur 10 ist die Plattform (4) im ausgefahrenen Zustand mit ausgezogenen Linien und im eingefahrenen Zustand mit gestrichelten Linien dargestellt.

Auf jeder Seite der Plattform ist ein Scherenmechanismus vorgesehen, der aus einem Doppelhebel (40) und einem Einfachhebel (41) besteht, der bei (44) in der Mitte des Doppelhebels (40) schwenkbar gelagert ist. Der Einfachhebel (41) ist auf der anderen Seite bei (43) am Rahmen (48) schwenkbar angeordnet. Der Einfachhebel (40) ist an seinen Enden ebenfalls an Schwenkpunkten befestigt, und zwar bei (45) an der Plattform (4) und bei (46) am Rahmen (48). Der Schwenkpunkt (46) ist dabei in einem Gleiterelement angeordnet, das in einer Schiene (47) vertikal gleiten kann. Durch die Schwenkpunkte (43) und (46) ist nicht nur ein Schwenken um eine horizontale Achse möglich. Die entsprechenden Befestigungselemente können vielmehr auch um eine vertikale Achse eine begrenzte Schwenkbewegung ausführen.

Der Antrieb erfolgt über eine hydraulische Kolben-Zylinder-Einheit. Der Hydraulikzylinder (42) ist bei (50) am Einfachhebel (41) schwenkbar befestigt. Die Kolbenstange des Hydraulikzylinders (42) ist bei (49) am Doppelhebel (40) schwenkbar befestigt. Wird die Kolbenstange des Hydraulikzylinders (42) nach links herausgefahren, so wird die in der Figur mit ausgezogenen Linien dargestellte ausgefahrene Stellung erreicht. Wird die Kolbenstange eingefahren, so gleitet der Befestigungspunkt (46) in der Gleitschiene (47) nach oben und die Plattform (4) wird eingefahren. Zu diesem Zweck ist eine entsprechende Ausnehmung (55) im Aufbau (3) vorgesehen.

Wie dies in Figur 11 gezeigt ist, wird durch gleichmäßiges Ausfahren der beiden auf beiden Seiten der Plattform angeordneten Scherenmechaniken die Plattform gerade aus dem Aufbau herausgefahren.

Bei ungleicher Betätigung der Scherenmechanik (40, 41) wird sich die Plattform (4) in eine seitlich horizontal verlagerte Position verstellen. Dabei wird die Plattform (4) am vorderen Ende in den Gelenkpunkten (45) gehalten und am aufbauseitigen Ende über zwei horizontal federnde Gleitführungen (51) geführt. Die aufbauseitige Führung der Plattform (4) kann auch über einen Zentralstift (52), der in einem mittig im Plattformboden angebrachten Führungsschlitz (53) läuft, erfolgen. Im zweiten Fall sind die federnden Gleitführungen (51) nicht erforderlich.

## Patentansprüche

1. Fahrzeug mit einem kastenförmigen Aufbau (3), der über eine Hubmechanik (40) mit dem Fahrgestell (1) verbunden ist und eine Ladeöffnung (14) und eine vor der Ladeöffnung (14) in vertikaler Richtung verschiebbar gelagerte Plattform (4) mit Seitenwänden (6) aufweist, die in vertikalen Schienen (10) gelagert ist, die am Rand der Ladeöffnung (14) angeordnet sind, dadurch gekennzeichnet, daß die vertikalen Schienen (10) Teil eines rechteckigen Rahmens (7) sind, der an einer Stirnwand des Aufbaus (3) seitlich verschiebbar gelagert ist.

2. Fahrzeug nach Anspruch 1, dadurch gekennzeichnet, daß die Stirnwand des Aufbaus (3) auf jeder Seite der Ladeöffnung (14) einen Wandteil aufweist, der als Faltenbalg (15) ausgebildet ist.

3. Fahrzeug nach Anspruch 1 oder 2, dadurch gekennzeichnet, daß die Plattform (4) zweiteilig ausgebildet ist, wobei der vordere Teil (17) teleskopförmig im hinteren (16) gelagert ist.

4. Fahrzeug nach einem der Ansprüche 1 bis 3, dadurch gekennzeichnet, daß die Grundfläche der Plattform ein schwenkbares Parallelogrammgestänge aufweist.

5. Fahrzeug nach Anspruch 4, dadurch gekennzeichnet, daß der Boden der Plattform zwei Halbkreisplatten (21, 24) und zwei Platten (25, 26) aufweist, die an ihrer Außenseite eine zur Halbkreisfläche komplementäre Form haben.

6. Fahrzeug nach einem der Ansprüche 1 bis 5, dadurch gekennzeichnet, daß die Plattform (4) an ein Hochklappen derselben ermöglichenden Schwenkgelenken (31, 33) befestigt ist und die Seitenwände als Parallelogrammgestänge (29–34) ausgebildet sind.

7. Fahrzeug nach einem der Ansprüche 1 bis 6, dadurch gekennzeichnet, daß die Plattform (4) von einem Scherenpaar (40, 41) gehalten ist und mit Hilfe desselben in ihrer Ebene schubladenartig in eine Ausnehmung (55) des Aufbaus (3) hinein- oder herausschiebbar ist.

8. Fahrzeug nach Anspruch 7, dadurch gekennzeichnet, daß durch einseitiges Ein- oder Ausfahren der Scherenmechanik (40, 41) die Plattform (4) seitlich schwenkbar angeordnet ist.

## Revendications

1. Véhicule comprenant une carrosserie du type fourgon (3) qui est reliée au châssis (1) par un mécanisme de levage (40) et qui présente une ouverture e chargement (14) et une plate-forme (4) à parois latérales (6) qui est montée mobile dans des rails verticaux (10), disposés au bord de l'ouverture de chargement (14), de façon à pouvoir se déplacer en direction verticale en avant de l'ouverture de chargement (14), caractérisé en ce que les rails verticaux (10) font partie d'un cadre rectangulaire (7) qui est monté de façon à pouvoir se déplacer latéralement sur une paroi frontale de la carrosserie (3).

2. Véhicule selon la revendication 1, caractérisé en ce que de chaque côté de l'ouverture de chargement (14), la paroi frontale de la carrosserie (3) présente une partie de paroi qui est réalisée sous forme de soufflet (15).

3. Véhicule selon la revendication 1 ou 2, caractérisé en ce que la plate-forme (4) est réalisée en deux parties, la partie avant (17) étant montée télescopiquement dans la partie arrière (16).

4. Véhicule selon l'une quelconque des revendications 1 à 3, caractérisé en ce que la surface de base de la plate-forme comporte des barres de parallélogramme articulé.

5. Véhicule selon la revendication 4, caractérisé en ce que le plancher de la plate-forme comporte deux plaques demi-circulaires (21, 24), et deux plaques (25, 26) qui ont, sur leur côté extérieur, une forme complémentaire de la surface demi-circulaire.

6. Véhicule selon l'une quelconque des revendications 1 à 5, caractérisé en ce que la plateforme (4) est fixée à des articulations pivotantes (31, 33) qui permettent de la rabattre vers le haut, et en ce que ses parois latérales sont réalisées sous forme de barres de parallélogramme (29–34).

7. Véhicule selon l'une quelconque des revendications 1 à 6, caractérisé en ce que la plateforme (4) est maintenue par une paire de mécanismes en ciseaux (40, 41), et en ce qu'à l'aide de ces mécanismes, elle peut coulisser dans son propre plan à la manière d'un tiroir pour être rentrée dans une cavité (55) de la carrosserie (3) et en être extraite.

8. Véhicule selon la revendication 7, caractérisé en ce que la plate-forme (4) est montée de façon à pouvoir pivoter latéralement par extension ou repliement unilatéral des mécanismes en ciseaux (40, 41).

**Claims**

1. A vehicle with a box-like superstructure (3), which is connected to the chassis (1) via a lifting mechanism (40) and has a loading opening (14), and mounted for vertical displacement in front of the loading opening (14) is a platform (4) which has side walls (6) and which is mounted in vertical rails (10) disposed at the edge of the loading opening (14), characterised in that the vertical rails (10) are part of a rectangular frame (7) which is mounted for lateral movement on an end wall of the superstructure (3).

2. A vehicle according to Claim 1, characterised in that on each side of the loading opening (14) the end wall of the superstructure (3) has a wall portion which takes the form of a bellows (15).

3. A vehicle according to Claim 1 or 2, characterised in that the platform (4) is in two parts, the front part (17) being mounted telescopically to the rear part (16).

4. A vehicle according to any one of Claims 1 to 3, characterised in that the bottom surface of the platform has a pivotable parallel linkage.

5. A vehicle according to Claim 4, characterised in that the floor of the platform has two semicircular plates (21, 24) and two plates (25, 26) which at their outer ends are of a shape which is complementary to the semicircular shape.

6. A vehicle according to any one of Claims 1 to 5, characterised in that the platform (4) is secured to pivot joints (31, 33) which enable the platform to be swung upwardly and the side walls are in the form of a parallel linkage (29–34).

7. A vehicle according to any one of Claims 1 to 6, characterised in that the platform (4) is supported by a pair of shear-legs (40, 41) and by means thereof it can slide in its plane in the manner of a drawer into or out of a recess (55) in the superstructure (3).

8. A vehicle according to Claim 7, characterised in that the platform (4) is arranged to be laterally pivotable by extending or retracting one end of the shear-leg mechanism (40, 41).

_Fig. 1_

_Fig. 2_

*Fig. 3*

_Fig. 4_

Fig. 5

Fig. 6

Fig. 7

*Fig. 8*

_Fig. 9_

*Fig. 10*

*Fig.11*